Europäisches Patentamt

European Patent Office

Office européen des brevets

(11) Veröffentlichungsnummer: **0 231 416 B1**

(12) **EUROPÄISCHE PATENTSCHRIFT**

(45) Veröffentlichungstag der Patentschrift: **16.10.91**

(51) Int. Cl.⁵: **A01G 1/00, E01F 8/00**

(21) Anmeldenummer: **86101490.0**

(22) Anmeldetag: **05.02.86**

(54) **Biologisches Begruenungselement und Verfahren zur Herstellungsolcher Begrünnungselemente sowie Verfahren zur Fassadenbegrünung.**

(43) Veröffentlichungstag der Anmeldung:
**12.08.87 Patentblatt 87/33**

(45) Bekanntmachung des Hinweises auf die
Patenterteilung:
**16.10.91 Patentblatt 91/42**

(84) Benannte Vertragsstaaten:
**AT BE CH DE FR GB IT LI LU NL SE**

(56) Entgegenhaltungen:
**EP-A- 0 047 365**
**WO-A-85/03842**
**DE-A- 2 639 835**
**DE-A- 2 733 428**
**US-A- 4 219 966**

(73) Patentinhaber: **Behrens, Wolfgang**
**Trespenmoor 25**
**W-2833 Gross Ippener(DE)**

(72) Erfinder: **Behrens, Wolfgang**
**Trespenmoor 25**
**W-2833 Gross Ippener(DE)**

(74) Vertreter: **Thömen, Uwe, Dipl.-Ing.**
**Patentanwalt U. Thömen Zeppelinstrasse 5**
**W-3000 Hannover 1(DE)**

Beschreibung

Die Erfindung betrifft ein biologisches Begrünungselement sowie ein Verfahren zur Herstellung von Begrünungselementen, und außerdem befaßt sich die Erfindung mit einem Verfahren zur Begrünung von Fassaden oder dergleichen.

Bekanntlich lassen sich Fassaden von Bauwerken, wie Häuser oder Brücken, nur schwer der jeweils vorhandenen natürlichen Landschaft anpassen. Vielmehr wirken diese Flächen häufig optische sehr störend. Darüberhinaus sind sie auch meistens lebensfeindlich, weil sie glatt oder geschlossenporig strukturiert oder chemisch aggressiv sind, so daß ein Wachsen von niederen oder höheren Pflanzen an diesen Flächen nicht möglich ist.

Mit zunehmendem Umweltbewußtsein gewinnt andererseits die Gestaltung der Umwelt nicht nur unter optischen Gesichtspunkten, sondern auch unter ökologischen Aspekten eine immer größere Bedeutung. In diesem Zusammenhang spielt neben der bekannten Maßnahme einer Begrünung von Dächern die Fassadenbegrünung eine wichtige Rolle.

Es ist schon seit langem bekannt, eine gewünschte Begrünung von Fassaden oder dergleichen mit Rankgewächsen wie Efeu, wilder Wein usw. vorzunehmen. Für die Kultur der Rankgewächse sind Pflanzgefäße erforderlich, die am Boden einer zu begrünenden Fläche aufgestellt werden. Ferner ist es dabei notwendig, sogenannte Rankhilfen in Form von Gittern vorzusehen, um dem Gewächs die Möglichkeit zu geben, entlang dieser Rankhilfen nach oben hin zu wachsen.

Im fertigen Zustand erwecken auf diese Weise begrünte Fassaden zwar einen optisch angenehmen Eindruck, allerdings ist zu berücksichtigen, daß dafür in nachteiliger Weise ein erheblicher Aufwand betrieben werden muß.

Eine vollständige Begrünung einer Fassade mit Rankgewächsen kann sich aufgrund der langen Wachstumsdauer der Planzen über mehrere Jahre hinweg erstrecken, Während dieser Zeit stellen die erforderlichen Rankhilfen einen optischen Störfaktor dar. Außerdem ist die Erstellung der Rankhilfen mit einem erheblichen Kostenfaktor verbunden. Auch die erforderliche Verwendung der Pflanzgefäße für die Rankgewächse muß als ungünstig angesehen werden.

Ferner wirkt es sich nachteilig aus, daß die Rankgewächse einer Pflege bedürfen, und daß neben einer Düngung häufig auch ein besonderes Bewässerungssystem in integrierter Form erforderlich ist. Darüberhinaus wirkt sich eine solche Begrünung mit Rankgewächsen unter optischen Gesichtspunkten häufig mangelhaft aus, weil eine vollflächige Begrünung der gesamten Fassadenfläche aufgrund des unterschiedlichen Wachstums der einzelnen Rankgewächse nicht immer gewährleistet ist.

Insgesamt stehen somit dem zunehmenden Bedürfnis nach Grünflächen und der ökologischen Bedeutung von Begrünungen im Hinblick auf die technische Realisierung als auch auf die damit verbundenen Kosten gravierende Nachteile hindernd im Wege.

Durch die Internationale Patentanmeldung Wo 85/03842 ist ein Vegetationskörper bekannt, welcher als wesentliche Bestandteile eine dreidimensionale Strukturmatte mit einer porösen Unterlage umfaßt. Die Strukturmatte wird mit einem strukturstabilen Substrat verfüllt, und zwar in der Weise, daß die Füllhöhe geringer als die Höhe der Strukturmatte selbst ist. Dadurch wird eine Freizone geschaffen, die mit Höheren und/oder Niederen Pflanzen ausgefüllt ist.

Allein schon wegen der bei dem bekannten Vegetationskörper erforderlichen Strukturmatte besitzt der gesamte Vegetationskörper eine relativ große Schichtdicke bzw. Höhe, die der Schichtdicke eines Rollrasens vergleichbar ist. Dadurch ist die einfache Handhabung des bekannten Vegetationskörpers behindert, und es ist nicht möglich, diesen Vegetationskörper etwa nach Art einer Tapete für den Transport aufzurollen oder ebenfalls nach Art einer Tapete an gewünschten Fassaden anzukleben.

Außerdem ist durch die US-A-4 219 966 ein Verfahren bekannt, bei welchem ein Nährmedium zusammen mit Samen auf eine Trägerschicht aufgebracht werden kann. Dadurch soll ein schnelles Wachstum eines Rasens ermöglicht werden.

Durch die DE-A-2 733 428 ist schließlich ein Verfahren bekannt, bei welchem eine Polyurethanschaumstoffmatte verwendet wird, innerhalb welcher sich Samen bzw. Pflanzen befinden. Da die Samen bzw. Pflanzen innerhalb dieser Schaumstoffmatte angeordnet sind, ist eine Trägerschicht, auf der das Nährmedium aufgebracht wird (das nur teilweise in die Trägerschicht eindringt), nicht vorgesehen. Die bekannte Schaumstoffmatte selbst bildet keine Trägerschicht, sondern eine Biomasse, die anorganisch ist. Bei dem bekannten Verfahren wird also eine Biomasse, nämlich die Schaumstoffmatte, und keine Trägerschicht auf ein Mauerwerk aufgebracht.

Der Erfindung liegt die Aufgabe zugrunde, ein biologisches Begrünungselement zu schaffen, welches in einfacher Handhabung eine Begrünung von Fassaden oder dergleichen in sehr kurzer Zeit mit einfachen, auch von einem Nichtfachmann durchzuführenden Maßnahmen erlaubt. Außerdem soll durch die Erfindung ein Verfahren zur Herstellung solcher Begrünungselemente geschaffen werden, und schließlich hat die Erfindung zum Ziel, ein einfaches Verfahren zur Begrünung von Fassaden oder dergleichen anzugeben.

Zur Lösung dieser Aufgabe sind die Merkmale der Patentansprüche 1, 10 und 19 vorgesehen.

Gemäß dem Patentanspruch 1 ist das biologische Begrünungselement dadurch gekennzeichnet, daß daß Nährmedium dünnschichtig, etwa 1 - 3 mm, auf der Trägerschicht aufgebracht und darin zumindest teilweise eingedrungen ist, daß das Nährmedium mit Niederen Pflanzen bewachsen ist, wobei die Trägerschicht und das Nährmedium zusammen mit den Niederen Pflanzen eine integrierte Einheit als Fertigelement bilden.

Für die Trägerschicht lassen sich in vorteilhafter Weise Vliese, insbesondere Nadelvliese verwenden, die eine wasserspeichernde Eigenschaft besitzen, mit einer rauhen Oberfläche versehen sind und außerdem von poröser Struktur sind, so daß das Nährmedium zumindest teilweise in die Trägerschicht eindringen kann.

In zweckmäßiger Ausgestaltung der Erfindung können mit Vorteil auch sogenannte "Bewässerungsvliese" eingesetzt werden, welche mit einem integrierten Bewässerungssystem in Form kleiner Schläuche versehen sind.

Die wasserspeichernde Eigenschaft der Trägerschicht ist für das Wachstum der niederen Pflanzen an klimatisch ungünstigen Stellen von Bedeutung. Durch die rauhe Oberfläche der Trägerschicht wird in vorteilhafter Weise gewährleistet, daß die niederen Pflanzen auf der Trägerschicht haften können und ausreichend Halt finden, da Moose keine Wurzeln, sondern nur Haftorgane besitzen.

Durch die poröse Struktur der Trägerschicht ist schließlich gewährleistet, daß das Nährmedium zu einem Teil in die Trägerschicht eindringen kann, so daß bei dem fertigen Begrünungselement insgesamt eine integrierte Einheit als Fertigelement vorliegt.

Das neue biologische Begrünungselement stellt ein bereits gebrüntes Fertigelement dar, welches einfach handhabbar ist. Es läßt sich nämlich nach Art einer Tapete für den Transport aufrollen und - ebenfalls nach Art einer Tapete - an gewünschten Fassaden ankleben. Es ist also in überraschender Weise eine Begrünung durch ein Verkleben des Fertigelementes möglich, welches man zur Charakterisierung als "Moostapete bezeichnen könnte.

Die mit dem neuen Begrünungselement erzielbaren Vorteile sind beachtlich. Die äußerst einfache Handhabung - Aufbringen des Begrünungselementes nach Art des Tapezierens - ermöglicht es auch einem Laien eine nachträgliche Begrünung von Fassaden, Beton-Lärmschutzwänden, Brandmauern, usw., durch Verkleben des Fertigelementes "Moostapete" mit einem Kleber vorzunehmen. Es ist sogar möglich, auch Flächen aus Holz, Kunststoff und Metall zu "tapezieren" bzw. in der beschriebenen Weise zu begrünen.

Die zu begrünende Fläche muß nicht unbedingt eben verlaufen, vielmehr ist es wegen der Nachgiebigkeit bzw. Verformbarkeit des Fertigelementes auch ohne weiteres möglich, Flächen mit Vertiefungen oder Wölbungen zu begrünen.

Bei größeren Flächen werden mehrere Rollen des Fertigelementes nebeneinander verklebt, wobei die Stoßstellen bzw. Stoßfugen rasch verwachsen, so daß ein einheitlicher Gesamteindruck der begrünten Fläche entsteht.

Schließlich läßt sich mit der Erfindung eine Begrünung in sehr kurzer Zeit erstellen, da das Fertigelement bereits vorkultiviert und beispielsweise mit einer oberen Moosschicht versehen ist. Es entfällt also die lange Wartezeit, wie sie bei Begrünung mit Rankgewächsen in Kauf genommen werden muß.

Ein bedeutsamer Aspekt ist das Merkmal, daß das neue Fertigelement auf die gewünschten Flächen durch Verkleben dauerhaft aufgebracht werden kann. Dies wird zum einen durch die aus Vlies bestehende Trägerschicht des Begrünungselementes und zum anderen durch einen besonderen Spezialkleber (Firma Rudolf Skrotzki, Harpstedt) erreicht.

Die Erfindung beschreitet erstmals den bisher nicht für möglich gehaltenen Weg, ein biologisches Begrünungselement als Fertigelement zu verkleben. Es mußte das Vorurteil überwunden werden, daß die Substanz des Klebers die niederen Pflanzen und auch die Trägerschicht nicht biologisch zerstört, und tatsächlich hat sich in Versuchen bestätigt, daß der Spezialkleber weder die Trägerschicht noch die Pflanzen angreift, daß aber trotzdem eine sichere Verbindung mit der zu begrünenden Oberfläche hergestellt werden kann. Der Kleber kann in üblicher Weise durch Ansprühen oder durch Spachteln auf die Fläche aufgebracht werden.

Ein weiterer Vorteil der Erfindung besteht in dem extrem geringen Gewicht des Begrünungselementes, dessen Schichtdicke insgesamt bei nur etwa 5 mm liegt. Somit können Bahnen - beispielsweise 1 m breit - mit einer großen Bahnlänge zu einer Rolle für den Transport und auch für die Lagerung aufgerollt werden. Das biologische Begrünungselement bildet mit der Trägerschicht, dem Nährmittel und mit den niederen Pflanzen eine in sich zusammengefügt integrierte Einheit, die sich auch beim Aufrollen oder beim Transport oder beim Verkleben nicht auflöst.

Häufig sind sowohl die Trägerschicht des Begrünungselementes als auch die Oberläche der zu begrünenden Fläche feucht, und im Zusammenhang mit dem oben schon erwähnten Spezielkleber sei erwähnt, daß dieser es ermöglicht, das Begrünungselement auch im nassen Zustand zu verkleben, da der Kleber auch dann seine volle Klebfähigkeit entfaltet.

Als weiterer positiver Umstand ist die geringe Pflegebedürftigkeit des auf eine Fläche aufgebrachten Begrünungselements hervorzuheben. In vielen Fällen reichen das Vlies als Trägermaterial auch als Wasserspeicher aus, zumal Moose (Trockenmoose, keine Waldmoose) auch größere Zeiträume (etwa 6 - 8 Wochen) ohne Niederschläge überleben können. Die Moose verändern dabei zwar ihre Färbung und werden grau, nach einer Befeuchtung begrünen sie jedoch wieder bereits innerhalb von wenigen Stunden. Eine mit Kosten und Aufwand verbundene besondere Düngung ist nicht erforderlich.

Bei zu begrünenden Flächen, die im Regenschatten liegen, insbesondere bei senkrechten Flächen, empfiehlt es sich, gegebenenfalls eine einfache Bewässerung in Form einer Tröpfchenbewässerung vorzusehen.

Bei dem neuen erfindungsgemäßen Verfahren zur Herstellung eines biologischen Begrünungselements als Fertigelement wird auf eine Unterlage, vorzugsweise eine Folie, eine Trägerschicht ausgelegt, und auf die Trägerschicht wird ein Nährmedium für Niedere Pflanzen aufgebracht, und schließlich wird unter gärtnerischer Pflege das Wachstum von Niederen Pflanzen auf dem Nährmedium betrieben. In neuartiger Weise wird hierbei das Nährmedium auf die Trägerschicht dünnschichtig, etwa 1 - 3 mm zusammen mit Sporen Niederer Pflanzen und/oder Pflanzenteilen Niederer Pflanzen aufgebracht, wobei das Nährmedium zumindest teilweise in die Trägerschicht eindringt. Dabei entsteht eine integrierte Einheit ohne Trennlagen, so daß ein biologisches Fertigelement vorliegt.

Das Nährmedium besteht aus Lehm, Lava, Dolomit und Oberboden, alles in feiner Körnung von etwa 0,1 - 0,3 mm. Zur Erzielung eines schnelleren Wachstums wird noch eine Bakterienkultur beigegeben, und ferner wird ein Haftkleber zugegeben, um dem Nährmedium einen besseren Zusammenhalt zu geben. Das Ganze wird in einem Rührwerk mit Wasser vermischt, und ferner werden auch gleich Sporen für die Niederen Pflanzen beigegeben.

Das so hergestellte Nährmedium - auch als Biomasse bezeichnet - wird dünnschichtig - etwa 1 - 3 mm - im Anspritzverfahren aufgebracht. Die Biomasse sollte nicht dicker sein, da Moose keine Wurzeln, sondern nur Haftorgane besitzen. Das Vlies besitzt eine rauhe Oberfläche und kann in zweckmäßiger Weiterbildung der Erfindung zum Teil auch genoppt sein, so daß ein Abschwemmen der Kultur verhindert wird und am Ende des Wachstums eine stabile Einheit als Fertigelement vorliegt.

Das durch die Erfindung geschaffene Verfahren zur Begrünung von Fassaden oder dergleichen mit biologischen Begrünungselementen beinhaltet den überraschend einfachen Verfahrensschritt, da in Bahnen vorliegende Begrünungselement mit seiner Trägerschicht unter Verwendung eines Spezialklebers auf die Fassade aufzukleben, vergleichbar dem Tapezieren von Wänden.

Weitere Vorteilhafte Merkmale der Erfindung sind in den Unteransprüchen angegeben und der Zeichnung zu entnehmen.

Nachfolgend wird die Erfindung anhand der in der Zeichnung dargestellten Ausführungsbeispiele näher erläutert. Es zeigen:

Fig. 1 und 2    . jeweils eine Querschnittsansicht eines Begrünungselementes in unterschiedlichen Herstellungsstufen

Fig. 3 und 4    jeweils eine Querschnittsansicht eines anderen Begrünungselementes, welches teilweise auch mit höheren Pflanzen bewachsen ist, und

Fig. 5    ein an einer Leitplanke verklebtes Begrünungselement gemäß Fig. 4.

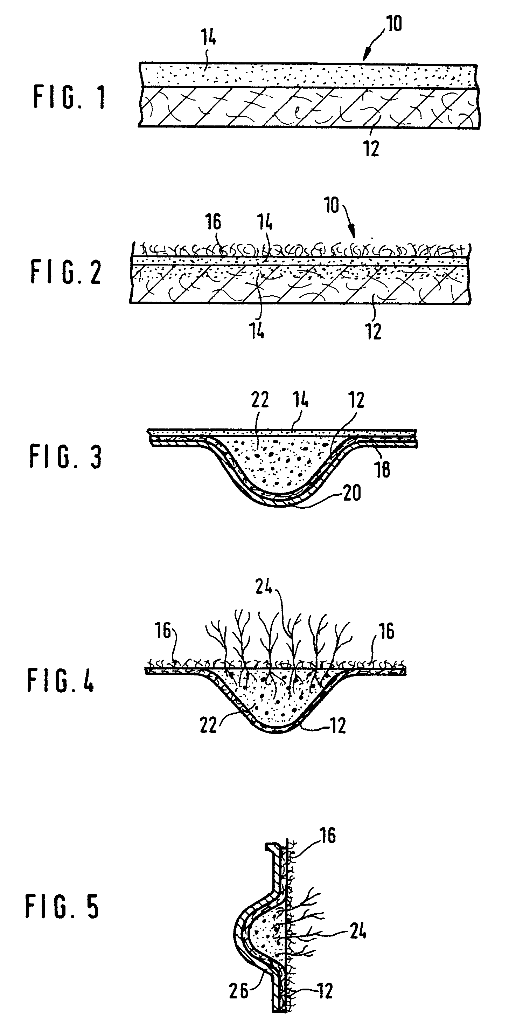

Das in Figur 1 und 2 zeichnerisch dargestellte Begrünungselement 10 umfaßt als Trägerschicht ein Vlies (Geotextil) 12, welches auf eine nicht dargestellte Folie ausgelegt wird. Die Schichtdicke des Vlieses 12 beträgt etwa 3 - 5 mm.

Auf das Vlies 12 wird im Anspritzverfahren dünnschichtig ein Nährmedium 14 (Biomasse) aufgebracht, welches bereits mit Sporen vermischt ist. Das Nährmedium 14 dringt gemäß Fig. 2 bis etwa zur Hälfte in das Vlies 12 ein, und unter gärtnerischer Kultur beginnt Moos 16 auf der Oberfläche zu wachsen. Um diese Wachstumsphase zu fördern, wird das Begrünungselement im Anfangsstadium schattiert, d.h., der Einfall des Sonnenlichtes wird reduziert.

Das Aufbringen des Nährmediums 14 auf das Vlies 12 erfolgt dünnschichtig, so daß die "Schicktdicke" des Nährmediums 14 etwa 1 - 3 mm beträgt. Größere Werte sollten vermieden werden, da Moose bekanntlich keine Wurzeln, sondern nur Haftorgane besitzen. Das Vlies 12 hat eine rauhe Oberfläche und ist zum Teil mit Noppen versehen, so daß ein Abschwemmen der Kultur verhindert wird.

Das Nährmedium 14 erfüllt die Aufgabe, das Wachsen von niederen Pflanzen zu ermöglichen. Im Fertig begrünten Endzustand gemäß Fig. 2 bilden das Vlies 12, das Nährmedium 14 und das Moos 16 eine integrierte Einheit als Fertigelement ohne Trennlagen. Das Fertigelement läßt sich nun in einzelne Bahnen mit einer Breite von beispielsweise 1 m schneiden und anschließend nach Art einer Tapete aufrollen und zum Anwendungsort transportieren.

Die Begrünung einer gewünschten Fläche erfolgt in Verfahrensschritten, die dem Tapezieren von Wänden entsprechen. Auf die zu begrünende Fläche wird also ein Kleber aufgetragen und anschließend wird das bahnförmige Begrünungselement 10 aufgeklebt. Wenn mehrere solche Bahnen nebeneinander verklebt werden, wachsen die Stoßfugen rasch zu, so daß ein optischer Gesamteindruck entsteht.

Die bisherigen Erläuterungen beziehen sich auf ein Begrünungselement, welches mit niederen Pflanzen - hier mit Moos 16 - bewachsen ist. Daneben ist es bei der Erfindung aber auch möglich, zusätzlich höhere Pflanzen zu verwenden, was nachfolgend anhand von Fig. 3 - 5 näher erläutert wird.

Fig. 3 zeigt für die Herstellung eine Form 18, welche eine Vertiefung 20 besitzt. Zunächst wird die Form 18 mit dem Vlies 12 als Trägerschicht ausgelegt, und anschließend wird die Vertiefung 20 mit Erde 22 als Nährmedium für Pflanzen 24 verfüllt.

Auf die gesamte etwa waagerechte verlaufende Oberfläche wird dann als nächstes in der schon beschriebenen Weise das Nährmedium 14 aufgebracht, so daß ein Bewuchs mit Moos 16 erfolgt. Zusätzlich wird dann später der Bereich der Erde 22 mit Samen, Sprossen oder Pflanzenteilen besäht, so daß hier gemäß Fig. 4 höhere Pflanzen 24 wachsen können, die in der Erde 22 verwurzeln.

Die auf diese Weise erzielte Querschnittsform des biologischen Begrünungselementes läßt sich mit Vorteil gemäß Fig. 5 für die Begrünung einer Leitplanke 26 anwenden, wobei der Bereich des Begrünungselementes 10 mit der Erde 22 die vorhandene Ausnehmung der Leitplanke 26 ausfüllt. Insgesamt entsteht somit eine etwa senkrecht verlaufende durch das Begrünungselement 10 gebildete Oberfläche, die im mittleren Bereich zusätzlich mit höheren Pflanzen 24 bewachsen ist.

**Patentansprüche**

1.  Biologisches Begrünungselement für Fassaden oder dergleichen, wobei das Begrünungselement eine untere poröse, eine wasserspeichernde Eigenschaft aufweisende Trägerschicht (12) besitzt, auf die ein biologisches Nährmedium (14) aufgebracht ist, wobei die Trägerschicht (12) mit einer rauhen Oberfläche ausgebildet ist, **dadurch gekennzeichnet,** daß das Nährmedium (14) dünnschichtig, etwa 1 - 3 mm, auf der Trägerschicht (12) aufgebracht und darin zumindest teilweise eingedrungen ist, daß das Nährmedium (14) mit Niederen Pflanzen (16) bewachsen ist, wobei die Trägerschicht (12) und das Nährmedium (14) zusammen mit den Niederen Pflanzen (16) eine integrierte Einheit als Fertigelement bilden.

2.  Begrünungselement nach Anspruch 1, dadurch gekennzeichnet, daß die Trägerschicht (12) ein Vlies, vorzugsweise ein Nadelvlies, ist.

3.  Begrünungselement nach Anspruch 2, dadurch gekennzeichnet, daß das Vlies für die Trägerschicht (12) durch ein Geotextil gebildet ist.

4.  Begrünungselement nach einem der Ansprüche 1 - 3, dadurch gekennzeichnet, daß das Flächengewicht der Trägerschicht (12) größer oder gleich 300 g/m² gewählt ist.

5.  Begrünungselement nach einem der vorhergehenden Ansprüche 1 - 4, dadurch gekennzeichnet, daß das Flächengewicht der Trägerschicht (12) etwa 500 g/m² beträgt.

6.  Begrünungselement nach Anspruch 1, dadurch gekennzeichnet, daß das Nährmedium (14) zusammen mit Sporen auf die Trägerschicht (12) aufgebracht ist.

7.  Begrünungselement nach Anspruch 6, dadurch gekennzeichnet, daß das Nährmedium (14) etwa 30 % Lehm, 20 % Lava, 30 % Dolomit, 20 % Oberboden enthält, und daß dem Nährmedium (14) eine Bakterienkultur für ein schnelleres Wachstum der niederen Pflanzen sowie ein Haftkleber beigegeben sind.

8.  Begrünungselement nach einem der vorhergehenden Ansprüche 1 - 7, dadurch gekennzeichnet, daß die Schichtdecke der Trägerschicht (12) etwa 3 - 5 mm beträgt.

9.  Begrünungselement nach einem der vorhergehenden Ansprüche 1 - 8, dadurch gekennzeichnet, daß die Oberfläche der Trägerschicht (12) genoppt ist.

10. Verfahren zur Herstellung eines biologischen Begrünungselementes als Fertigelement, wobei auf eine Unterlage -vorzugsweise eine Folie - eine Trägerschicht (12) ausgelegt wird, auf die Trägerschicht ein Nährmedium (14) für Niedere Pflanzen (16) aufgebracht wird und wobei unter gärtnerischer Pflege das Wachstum von Niederen Pflanzen auf dem Nährmedium (14) betrieben wird, **dadurch gekennzeichnet,** daß das Nährmedium auf die Trägerschicht (12) dünnschichtig, etwa 1 - 3 mm, zusammen mit Sporen Niederer Pflanzen und/oder Pflanzenteilen Niederer Pflanzen aufgebracht wird, und daß das Nährmedium (14) zumindest teilweise in die Trägerschicht eindringt.

**11.** Verfahren nach Anspruch 10, dadurch gekennzeichnet, daß das Nährmedium (14) - mit Wasser vermischt - im Anspritzverfahren auf die Trägerschicht (12) aufgebracht wird.

**12.** Verfahren nach Anspruch 10 oder 11, dadurch gekennzeichnet, daß das Nährmedium (14) mit den Sporen vermischt wird.

**13.** Verfahren nach einem der vorhergehenden Ansprüche 10 - 12, dadurch gekennzeichnet, daß das Begrünungselement (10) nach dem Aufbringen des Nährmediums (14) im Anfangsstadium schattiert wird, um den Wachstumsprozeß der niederen Pflanzen (16) zu fördern.

**14.** Verfahren nach einem der vorhergehenden Ansprüche 10 - 13, dadurch gekennzeichnet, daß das Begrünungselement (10) in Bahnen zerlegt wird, und daß die Bahnen zum Transport aufgerollt werden.

**15.** Verfahren nach einem der vorhergehenden Ansprüche 10 - 14, dadurch gekennzeichnet, daß das Nährmedium (14) mit einer Schichtdicke von etwa 1 - 3 mm aufgetragen wird, und daß die Schichtdicke der Trägerschicht (12) etwa 3 - 5 mm beträgt.

**16.** Verfahren nach einem der vorhergehenden Ansprüche 10 - 15, dadurch gekennzeichnet, daß die Trägerschicht (12) in eine mit einer Vertiefung (20) versehene Form (18) gelegt wird, daß die Vertiefung (20) mit Erde (22) ausgefüllt wird, und daß anschließend auf die gesamte, durch die außerhalb der Vertiefung (20) liegende Trägerschicht (12) und durch die Erde (22) gebildete Oberfläche das Nährmedium (14) aufgebracht wird.

**17.** Verfahren nach Anspruch 16, dadurch gekennzeichnet, daß im Bereich der Vertiefung (20) Samen, Sprossen oder Pflanzen eingesät werden.

**18.** Verfahren nach Anspruch 17, dadurch gekennzeichnet, daß die Samen, Sprossen oder Pflanzen dann eingesät werden, wenn die Oberfläche mit Moos (16) bewachsen ist.

**19.** Verfahren zur Begrünung von Fassaden oder dergleichen mit biologischen Begrünungselementen nach einem oder mehreren der Ansprüche 1 - 9, dadurch gekennzeichnet, daß das Begrünungselement (10) mit seiner Trägerschicht (12) mittels eines Spezialklebers auf die Fassade aufgeklebt wird.

## Claims

**1.** Biological greening element for facades or the like, in which the greening element has a lower, porous support layer (12) having a water-storing property, to which is applied a biological nutrient medium (14), the support layer (12) being constructed with a rough surface, characterized in that the nutrient medium (14) is applied in thin coating form of approximately 1 to 3 mm to the support layer (12) and at least partly penetrates the same, that the nutrient medium (14) is covered with low plants (16), the support layer (12) and the nutrient medium (14) together with the low plants (16) forming an integrated unit as a finished element.

**2.** Greening element according to claim 1, characterized in that the support layer (12) is a fleece, preferably a needled fleece.

**3.** Greening element according to claim 2, characterized in that the fleece for the support layer (12) is formed by a geotextile.

**4.** Greening element according to one of the claims 1 to 3, characterized in that the weight per unit area of the support layer (12) is equal to or greater than 300 g/m$^2$.

**5.** Greening element according to one of the claims 1 to 4, characterized in that the weight per unit area of the surface layer (12) is approximately 500 g/m$^2$.

**6.** Greening element according to claim 1, characterized in that the nutrient medium (14) is applied together with the spores to the support layer (12).

**7.** Greening element according to claim 6, characterized in that the nutrient medium (14) contains approximately 30% loam 20% lava, 30% dolomite and 20% top soil and that to the nutrient medium (14) are added a bacterial culture for the faster growth of the low plants and a contact adhesive.

**8.** Greening element according to one of the preceding claims, 1 to 7, characterized in that the thickness of the support layer (12) is approximately 3 to 5 mm.

**9.** Greening element according to one of the preceding claims 1 to 8, characterized in that the surface of the support layer (12) is napped.

10. Process for producing a biological greening element as a finished element, a support layer (12) being laid out on a substrate, preferably a foil, to the support layer is applied a nutrient medium (14) for low plants (16) and the latter are grown on the nutrient medium (14) with horticultural assistance, characterized in that the nutrient medium is applied to the support layer (12) in thin layer form of approximately 1 to 3 mm, together with spores, low plants and/or parts of the latter and that the nutrient medium (14) at least partly penetrates the support layer.

11. Process according to claim 10, characterized in that the nutrient medium (14), mixed with water, is sprayed onto the support layer (12).

12. Process according to claims 10 or 11, characterized in that the nutrient medium (14) is mixed with the spores.

13. Process according to one of the preceding claims 10 to 12, characterized in that, following the application of the nutrient medium (14), the greening element (10) is shaded in the initial stage in order to encourage the growth process of the low plants (16).

14. Process according to one of the preceding claims 10 to 13, characterized in that the greening element (10) is broken down into web form and the webs are rolled up for transportation purposes.

15. Process according to any one of the preceding claims 10 to 14, characterized in that the nutrient medium (14) is applied in a thickness of approximately 1 to 3 mm and that the thickness of the support layer (12) is approximately 3 to 5 mm.

16. Process according to one of the preceding claims 10 to 15, characterized in that the support layer (12) is placed in a form (18) provided with a depression (20), the latter is filled with soil (22) and subsequently the nutrient medium (14) is applied to the entire surface formed by the support layer (12) located outside the depression (20) and by the soil (22).

17. Process according to claim 16, characterized in that seed, shoots or plants are sown in the vicinity of the depression (20).

18. Process according to claim 17, characterized in that the seed, shoots or plants are sown when moss (16) has covered the surface.

19. Process for greening facades or the like with biological greening elements according to one or more of the claims 1 to 9, characterized in that the greening element (10), with its support layer (12), is stuck to the facade by means of a special adhesive.

**Revendications**

1. Elément biologique de gazonnement pour façades, etc., l'élément biologique se composant d'une couche porteuse (12) inférieure, poreuse et de nature à emmagasiner l eau, sur laquelle est appliqué un milieu nutritif biologique (14), la couche porteuse (12) ayant une surface rugueuse, **caractérisé en ce que** le milieu nutritif (14) est appliqué en couche mince de 1 à 3 mm environ, sur la couche porteuse (12) et a pénétré celle-ci au moins partiellement, en ce que le milieu nutritif (14) est recouvert de plantes basses (16), la couche porteuse (12) et le milieu nutritif (14) formant, avec les plantes basses, une unité intégrée sous forme d'élément préfabriqué.

2. Elément de gazonnement suivant la revendication 1, **caractérisé en ce que** la couche porteuse (12) est un non-tissé, de préférence un non-tissé aiguilleté.

3. Elément de gazonnement suivant la revendication 2, **caractérisé en ce que** le non-tissé pour la couche porteuse est formé par un géotextile.

4. Elément de gazonnement suivant une des revendications 1 à 3, **caractérisé en ce que** le grammage de la couche porteuse (12) est plus grand ou égal à 300 g/m².

5. Elément de gazonnement suivant une des revendications précédentes 1 à 4, **caractérisé en ce que** le grammage de la couche porteuse (12) s'élève à 500 g/m2 environ.

6. Elément de gazonnement suivant la revendication 1, **caractérisé en ce que** le milieu nutritif (14) est, avec des spores, appliqué sur la couche porteuse (12).

7. Elément de gazonnement suivant la revendication 6, **caractérisé en ce que** le milieu nutritif (14) contient environ 30 % d'argile, 20 % de lave, 30% de dolomie, 20 % de terre de surface, et en ce qu'au milieu nutritif (14) sont ajoutées une culture bactérienne pour une croissance plus rapide des plantes basses ainsi qu'une masse autoadhésive.

8. Elément de gazonnement suivant une des revendications précédentes 1 à 7, **caractérisé en ce que** l'épaisseur de la couche porteuse (12) s'élève à environ 3 à 5 mm.

9. Elément de gazonnement suivant une des revendications précédentes 1 à 8, **caractérisé en ce que** la surface de la couche porteuse (121) est nopée.

10. Procédé de fabrication d'un élément de gazonnement biologique sous forme d'élément préfabriqué, une couche porteuse (12) appliquée sur un support, de préférence une feuille, étant revêtue d'un milieu nutritif (14) pour plantes basses (16), la croissance des plantes basses sur le milieu nutritif étant favorisée par des soins horticoles, **caractérisé en ce que** le milieu nutritif est appliqué en couche mince de 1 à 3 mm environ, avec des spores et/ou parties de plantes basses, sur la couche porteuse (12), et en ce que le milieu nutritif (14) pénètre au moins partiellement dans la couche porteuse.

11. Procédé suivant la revendication 10, **caractérisé en ce que** le milieu nutritif (14) - mélangé à de l'eau - est appliqué sur la couche porteuse (12) selon le procédé de l'arrosage.

12. Procédé suivant la revendication 10 ou 11, **caractérisé en ce que** le milieu nutritif (14) est mélangé avec les spores.

13. Procédé suivant une des revendications précédentes 10 à 12, **caractérisé en ce que,** après l'épandage du milieu nutritif (14), l'élément de gazonnement (10) est, pendant la phase initiale, mis à l'ombre afin de promouvoir le processus de croissance des plantes basses (16).

14. Procédé suivant une des revendications précédentes 10 à 13, **caractérisé en ce que** l'élément de gazonnement (10) est découpé en lés et en ce que les lés sont enroulés pour le transport.

15. Procédé suivant une des revendications précédentes 10 à 14, **caractérisé en ce que** le milieu nutritif (14) est applique avec une épaisseur de 1 à 3 mm environ et en ce que l'épaisseur de la couche porteuse (12) s'élève à 3 à 5 mm environ.

16. Procédé suivant une des revendications précédentes 10 à 15, **caractérisé en ce que** la couche porteuse (12) est posée dans un moule (18) pourvu d'une cavité (20), en ce que la cavité (20) est remplie de terre (22) et en ce que le milieu nutritif est ensuite appliqué sur l'ensemble de la surface formée par la terre (22) et la couche porteuse (12) se trouvant à l'extérieur de la cavité (20).

17. Procédé suivant la revendication 16, **caractérisé en ce que** des semences, pousses ou plantes sont ensemencées dans la zone de la cavité (20).

18. Procédé suivant la revendication 17, **caractérisé en ce que** les semences, pousses ou plantes sont ensemencées lorsque la surface est recouverte de mousse (16).

19. Procédé de gazonnement de façades, etc., avec des éléments biologiques de gazonnement suivant une ou plusieurs des revendications 1 à 9, **caractérisé en ce que** l'élément de gazonnement 10 est, avec sa couche porteuse (12), collé sur la façade au moyen d'une colle spéciale.

FIG. 1

FIG. 2

FIG. 3

FIG. 4

FIG. 5